# EUROPÄISCHE PATENTSCHRIFT

(11) **EP 2 363 650 B1**
(45) Veröffentlichungstag und Bekanntmachung des Hinweises auf die Patenterteilung: **16.10.2019**
(21) Anmeldenummer: 11151298.4
(22) Anmeldetag: 18.01.2011
(51) Int. Cl.: F24D 12/02, F24D 19/10

(54) **Wärmeerzeugergruppe mit Strahlpumpenregelung**
Heater group with jet pump regulation
Groupe de production de chaleur doté d'un réglage de pompes à jet

(30) Priorität: 24.02.2010 DE 102010009081
(43) Veröffentlichungstag der Anmeldung: 07.09.2011
(73) Patentinhaber: Helmut Bälz GmbH, D-74076 Heilbronn (DE)
(72) Erfinder: Thoma, Hans Günther, 21244 Buchholz (DE)
(74) Vertreter: Rüger Abel Patentanwälte PartGmbB

(56) Entgegenhaltungen:
- EP-A2- 1 184 629
- WO-A1-82/01057
- DE-B1- 2 852 895
- DE-U1- 20 212 916

## Beschreibung

Die Erfindung betrifft eine Wärmenutzungsanlage mit wenigstens zwei Wärmequellen gleicher oder unterschiedlicher Bauart.

Es sind Wärmeversorgungsanlagen bekannt, bei denen mehrere Wärmeverbraucher aus einer einzigen Wärmequelle mit Wärme versorgt werden. Zum Beispiel offenbart die DE 198 59 364 C2 dazu ein Fernwärmenutzungssystem, in dem die Wärmezuteilung zu einzelnen Wärmeverbrauchern durch Strahlpumpen erfolgt. Diese nutzen den im Fernwärmesystem zwischen Vorlauf und Rücklauf vorhandenen Differenzdruck zur Umwälzung des Wärmeträgerfluids in den Abnehmerkreisen, so dass eine gesonderte elektrische Unwälzpumpe zur Umwälzung des Wärmeträgerfluids überflüssig wird.

Aus der Gebrauchsmusterschrift DE 202 12 916 U1 ist eine Heizungsanlage mit mehreren Heizkesseln bekannt, die parallel zueinander an eine gemeinsame Vorlaufleitung und eine gemeinsame Rücklaufleitung angeschlossen sind. An die gemeinsame Vorlaufleitung sind Treibmittelanschlüsse von Strahlpumpen angeschlossen, deren Ausgänge zu den Rücklaufanschlüssen der Heizkessel führen. Die Sauganschlüsse der Strahlpumpen sind mit der gemeinsamen Rücklaufsammelleitung verbunden.

Mit diesem Konzept soll erreicht werden, dass einzelne Heizkessel der Heizungsanlage, wenn sie abgeschaltet sind, warmgehalten werden, um die Ausbildung von Kondensat im Brennraum und an Kesselteilen sowie Schocktemperaturen am Kessel bei Einschaltung des Brenners zu verhindern. Außerdem sollen besonders niedrige Rücklauftemperaturen ermöglicht werden.

Zunehmend stellt sich die Aufgabe, in Wärmenutzungsanlagen mehrere Wärmequellen zu integrieren. Dies kann zumindest dann problematisch werden, wenn die einzelnen Wärmequellen sehr unterschiedliche Eigenschaften haben. Beispielsweise können sie sich hinsichtlich der erforderlichen Durchströmungen, Vorlauf und Rücklauftemperaturen oder ähnlicher Parameter grundsätzlich unterscheiden.

Es ist Aufgabe der Erfindung, ein Konzept anzugeben, mit dem sich mehrere Wärmequellen in einer Wärmenutzungsanlage zusammenfassen lassen.

Diese Aufgabe wird mit der Wärmenutzungsanlage nach Anspruch 1 gelöst:
Die erfindungsgemäße Wärmenutzungsanlage weist mehrere Wärmequellen auf, die an ein gemeinsames Wärmeträgerkreislaufsystem angeschlossen sind. Wenigstens einer der Wärmequellen ist eine Strahlpumpe vorgeschaltet. Vorzugsweise sind mehrere oder allen Wärmequellen Strahlpumpen vorgeschaltet. Dazu ist die jeweilige Strahlpumpe in der Rücklaufleitung angeordnet, über die der Wärmequelle Wärmeträgerfluid zugeführt wird. So saugt die Wärmepumpe Wärmeträgerfluid aus dem jeweiligen Vorlauf der Wärmequelle ab und mischt dieses dem Rücklauf bei. So wird das Temperaturniveau der Wärmequelle und des Vorlaufs bei gleichzeitig erhöhter Durchströmung der Wärmequelle angehoben.

Durch die Vorschaltung einer Strahlpumpe vor die Wärmequelle kann in der Wärmequelle der Volumenstrom des Wärmeträgerfluids und die sich einstellende Vorlauftemperatur zweckmäßig reguliert werden. Insbesondere ist es möglich, diese Größen unabhängig von dem Wärmebedarf des Wärmeabnehmers und unabhängig von dem Volumenströmen und Temperaturen anderer Wärmequellen einzustellen. Auf diese Weise kann jede Wärmequelle in dem für sie optimalen Betriebspunkt gefahren werden. Das erfindungsgemäße Konzept gestattet somit insbesondere die Zusammenfassung von Wärmequellen mit unterschiedlichen Betriebcharakteristika in ein und derselben Wärmenutzungsanlage.

Mit der Vorschaltung von Strahlpumpen vor die einzelnen Wärmequellen gelingt es, in dem Wärmeträger-Kreislauf mit einer einzigen zentralen Umwälzpumpeneinheit auszukommen. Diese wird zum Beispiel durch eine einzige elektrische Pumpe oder auch durch zwei oder mehrere parallel geschaltete Umwälzpumpen gebildet. Diese zentrale elektrische Umwälzpumpeneinheit genügt zur Aufrechterhaltung des gesamten Wärmeträgerfluid-Kreislaufs. Die einzelnen Wärmequellen benötigen, sofern sie keinen eigenen inneren Kreislauf aufweisen, keine Umwälzpumpen. Ebenso benötigen die Wärmeverbraucher keinerlei Umwälzpumpen. Sie können ebenfalls über Strahlpumpen reguliert werden, wie es aus dem Stand der Technik bekannt ist.

Die einzelnen Wärmequellen können durch Heizkessel, Öfen, Sonnenkollektoren, Geothermieanlagen, Wärmekraftmaschinen. Brennstoffzellen, Wärmepumpen oder dergleichen gebildet werden. Als Wärmequellen können auch Einrichtungen zur Abfallwärmenutzung einbezogen werden. Es können auch Wärmequellen einbezogen werden, die eine Wärmeabgabe nur zeitweilig und womöglich zu unpassenden Zeiten liefern. Ein in das System einbezogener Pufferspeicher kann diese Wärme puffern. Vorzugsweise werden als Strahlpumpen geregelte Strahlpumpen vorgesehen. Diese haben ein Regelorgan, mit dem sich die Fördermenge der Strahlpumpe im Idealfall auf Null stellen und ansonsten vorzugsweise stufenlos regulieren lässt. Beispielsweise kann eine inaktive Wärmequelle durch Schließen der Strahlpumpe von dem Kreislaufsystem abgetrennt werden.

Ist die Wärmequelle beispielsweise ein mit Festbrennstoff oder fluidem Brennstoff versorgter Ofen oder Kessel, kann die Steuereinrichtung die Strahlpumpe der betreffenden Wärmequelle zunächst auf eine definierte Mindeststellung bringen, um im Anfahrzustand eine vom Hersteller geforderte Mindestzirkulation einzuhalten. Hat der betreffende Ofen oder Kessel dann seine Arbeitstemperatur erreicht, regelt die Strahlpumpe temperaturabhängig den Volumenstrom energieoptimiert. Sie kann den Volumenstrom und die sich einstellende Vorlauf- und Rücklauftemperatur so justieren, dass an dem betreffenden Ofen oder Kessel der maximale energetische Wirkungsgrad erreicht wird.

Außerdem kann über die entsprechende Einstellung der verschiedenen Strahlpumpen eine Volumenstromverteilung zwischen den einzelnen Wärmequellen erreicht werden, die insgesamt zu einem kostenoptimierten Betrieb führt. Beispielsweise kann die Gewinnung von Solarenergie Vorrang vor der Gewinnung von Wärmeenergie aus der Verbrennung von Brennstoffen haben. Liefert beispielsweise die Solaranlage einen großen Anteil der aktuell erforderlichen Wärme und ist dennoch ein geringes Maß an Zuheizung erforderlich, wird die Zuheizung in dem betreffenden Kessel auf ein Minimum reduziert und zwar auch dann, wenn dadurch ein etwas geringerer Wirkungsgrad des Ofens in Kauf zu nehmen wäre. Allerdings kann durch die Strahlpumpenregelung die Temperaturspreizung zwischen Vorlauf und Rücklauf an dem betreffenden Ofen oder Kessel meist doch auf einen optimalen Wert eingestellt werden. Durch den Betrieb der einzelnen Wärmequellen mit Strahlpumpe und durch die Beimischung von Wärmeträgervorlauf zum Rücklauf lassen sich die Durchströmung und die Vorlauftemperatur zumindest in Grenzen unabhängig voneinander einstellen. Auf diese Weise lassen sich beide Ziele, nämlich eine Optimierung des Wirkungsgrad an den einzelnen Wärmequellen mit dem Ziel der optimalen Nutzung möglichst kostenlos anfallender Wärme (zum Beispiel Sonnenenergie) in Einklang bringen.

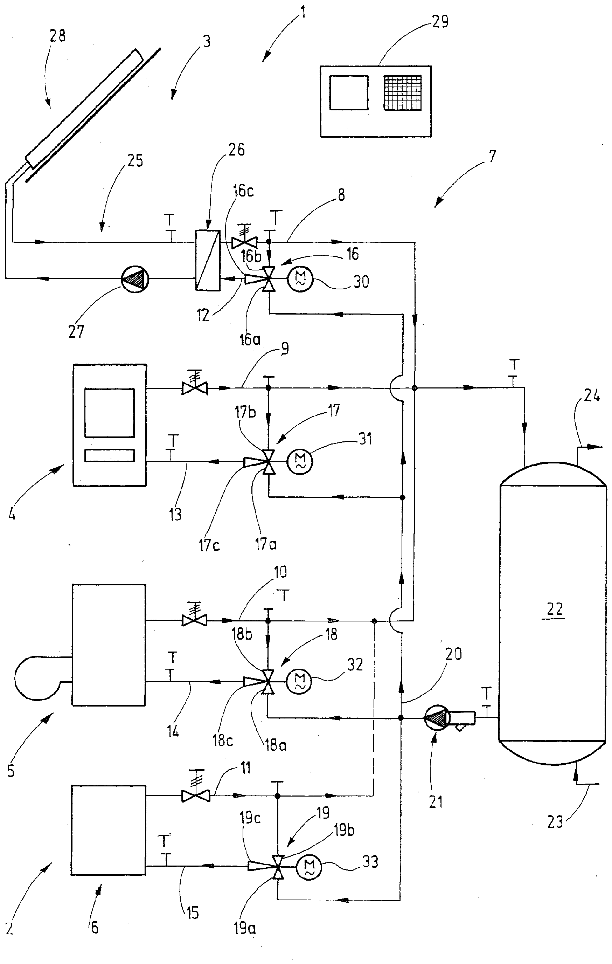

Weitere Einzelheiten vorteilhafter Ausführungsformen der Erfindung sind Gegenstand der Zeichnung, der Beschreibung oder von Ansprüche. Die Beschreibung beschränkt sich auf wesentliche Aspekte der Erfindung und zugehöriger Gegebenheiten.

Die einzige Figur zeigt:
Eine Wärmenutzungsanlage in schematisierter Prinzipdarstellung.

In der Figur ist eine Wärmenutzungsanlage 1 veranschaulicht, die zum Beispiel zur Beheizung eines Gebäudes dient. Die Wärmenutzungsanlage 1 ist in der Figur nur auszugsweise und insbesondere hinsichtlich der Komponenten zur Wärmegewinnung veranschaulicht. Verbraucher, wie beispielsweise Heizkörper, Fußbodenheizungen, Brauchwasserspeicher oder dergleichen sind nicht dargestellt.

Die Wärmenutzungsanlage 1 nutzt mehrere, vorzugsweise verschiedene, gegebenenfalls aber auch gleichartige Wärmequellen 2, zu denen beispielsweise eine thermische Solaranlage 3, ein für Festbrennstoffe geeigneter Ofen 4, ein für fluide Brennstoffe geeigneter Kessel 5, wie beispielsweise ein Gasheizkessel oder ein Ölheizkessel, oder eine sonstige Wärmequelle 6 gehören. Die sonstige Wärmequelle kann beispielsweise eine Geothermieanlage, eine Anlage zur Abwärmenutzung einer Brennstoffzelle, eine im Kraftwärmeverbund arbeitende Wärmekraftmaschine oder auch ein Wärmespeicher sein.

Zur Vernetzung aller Wärmequellen 2, dient ein Wärmeträger-Kreislaufsystem 7, an das alle Wärmequellen 2 und die nicht weiter dargestellten Verbraucher angeschlossen sind. Das Wärmeträger-Kreislaufsystem 7 umfasst jeweils einen von der jeweiligen Wärmequelle 2 weg führenden Vorlauf 8 bis 11 und einen zu der jeweiligen Wärmequelle hin führenden Rücklauf 12 bis 15. An den Rücklauf 12 bis 15 ist bei zumindest einer der Wärmequellen 2, vorzugsweise bei mehreren, vorzugsweise bei allen Wärmequellen 2, jeweils eine Strahlpumpe 16 bis 19 angeschlossen. Jede Strahlpumpe hat jeweils einen Treibanschluss a, einen Sauganschluss b und einen Diffusoranschluss c. Zur Unterscheidung sind die entsprechenden Anschlüsse a, b, c in der Figur zusätzlich mit dem jeweiligen Bezugszeichen der Strahlpumpe versehen (16a, 16b, 16c, 17a, 17b, 17c usw.).

Die Diffusoranschlüsse 16c bis 19c sind mit dem jeweiligen Rücklauf 12 bis 15 verbunden, die Sauganschlüsse 16b bis 19b sind mit dem jeweiligen Vorlauf 8 bis 11 verbunden. Die Treibanschlüsse 16a bis 19a sind über eine entsprechende Rücklaufsammelleitung 20 an die Druckseite einer Umwälzpumpeneinheit 21 angeschlossen, die aus vorzugsweise einer oder auch mehreren elektrischen Pumpen besteht. Die Umwälzpumpeneinheit 21 ist direkt mit dem Rücklauf aller Wärmeverbraucher oder den Rücklauf eines Pufferspeichers 22 verbunden, zu dem der Rücklauf 23 der Wärmeverbraucher führt. Zu dem Pufferspeicher 22 oder alternativ dem Vorlauf 24 der Wärmeverbraucher führen die Vorläufe 8 bis 11.

Wie ersichtlich wird das Wärmeträger-Kreislaufsystem 7 durch ein vernetztes Rohrleitungssystem gebildet, das von einem einheitlichen Wärmeträgerfluid durchströmt ist. Dieses Wärmeträgerfluid, beispielsweise Wasser, durchströmt somit die Wärmeverbraucher und gegebenenfalls auch die Wärmequellen 2. Es ist jedoch möglich, eine oder mehrere der Wärmequellen 2 von der Durchströmung auszunehmen. Beispielsweise kann die thermische Solaranlage 3 einen eigenen Wärmeträgerkreislauf 25 aufweisen, der über einen Wärmetauscher, vorzugsweise einen Plattenwärmetauscher 26 wärmetechnisch an den Wärmeträger-Kreislauf 7 angeschlossen ist. Der Plattenwärmetauscher 26 trennt den als Wärmeträgerfluid beispielsweise Glukol oder eine Glukol-Wassermischung enthaltenen Kreislauf 25 von dem Wärmeträger-Kreislauf 7. Eine Umwälzpumpe 27 fördert in dem Kreislauf 25 den jeweiligen Wärmeträger zu einem Sonnenkollektor 28 und von diesem zurück zu dem Plattenwärmetauscher 26.

Die insoweit beschriebene Wärmenutzungsanlage 1 ist mit einer Steuerungseinrichtung 29 versehen, die die vorhandenen Strahlpumpen 16 bis 19 über entsprechende Stellmotoren 30, 31, 32, 33 einstellen kann. Zum Beispiel können die Strahlpumpen 16 bis 19 eine Ventilspindel aufweisen, mit der die Treibdüse mehr oder weniger freigebbar ist. Es können alternative oder ergänzende Einstellmöglichkeiten vorgesehen sein. Beispielsweise kann in oder an dem Sauganschluss B jeweils ein Drosselventil vorgesehen sein. Weiter sind in dem System vorzugsweise an mehreren Stellen Temperatursensoren vorgesehen, die in der Zeichnung jeweils unterschiedslos durch den Großbuchstaben T gekennzeichnet sind. Die von den Temperatursensoren T gemessenen Temperaturen werden über nicht weiter dargestellte Informationsverbindungswege an die Steuereinrichtung 29 geliefert. Zum Beispiel können in allen Vorlaufleitungen und Rückaufleitungen entsprechende Temperatursensoren vorgesehen sein.

Die Wärmenutzungsanlage 1 arbeitet wie folgt:
Es wird davon ausgegangen, das wenigstens eine der Wärmequellen 2, beispielsweise die thermische Solaranlage 3 Wärme liefert. Damit stellt die Steuerungseinrichtung 29 die Strahlpumpe 16 so ein, dass an dem Wärmetauscher 26 die zur Wärmenutzung optimale Vorlauftemperatur und, zumindest falls die Rücklauftemperatur gemessen wird, auch die optimale Rücklauftemperatur eingestellt wird. Die Umwälzpumpe 27 kann zusätzlich reguliert werden. Durch die Beimischung von Vorlaufwasser aus der Vorlauf-Leitung 8 in den Rücklauf (Leitung 12) kann die Vorlauftemperatur auf einen relativ hohen Wert eingestellt werden, so dass auch bei mäßiger Sonneneinstrahlung hohe Temperaturen zur Speisung des Pufferspeichers 22 oder angeschlossener Verbraucher erreicht werden.

Fällt die Wärmelieferung durch den Sonnenkollektor 28 weg oder wird zusätzlich Wärme benötigt, können eine oder mehrere der sonstigen Wärmequellen 2 aktiviert werden. Beispielsweise wird der Kessel 5 hochgefahren. Dazu wird die Strahlpumpe 18 so weit geöffnet, dass an dem Vorlauf 14 und dem Rücklauf 10 eine gewünschte relativ geringe Strömung erreicht wird. So erreicht der Kessel 5 relativ schnell seine Arbeitstemperatur. Es kann dann die Durchströmung erhöht werden, indem die Strahlpumpe 18 entsprechend nachreguliert wird.

Entsprechend werden auch alle anderen Wärmequellen bedarfsweise genutzt.

Bei der vorgestellten Wärmenutzungsanlage entsteht jeweils an jeder Wärmequelle 2 ein Kreislauf über die Vorlaufleitung, die zum Sauganschluss B der jeweiligen Strahlpumpe führende Bypass-Leitung und die jeweilige Rücklaufleitung. Dadurch ist der Massenstrom in der jeweiligen Wärmequelle 2 höher als in der Vorlaufleitung. Damit kann, falls gewünscht, die Temperaturdifferenz zwischen Vorlauf und Rücklauf gemindert und die Wärmenutzung in der jeweiligen Quelle verbessert werden. Außerdem genügt eine einzige Umwälzpumpe 21 zum Betrieb des gesamten Systems.

Bei einer mehrere Wärmequellen 2 umfassenden Wärmenutzungsanlage 1 dient eine zentrale Umwälzpumpe 21 zur Aufrechterhaltung eines das Wärmeträger-Kreislaufsystem 7 durchsetzenden Flusses. Die einzelnen Strahlpumpen 16 bis 19 werden so reguliert, dass die für die jeweilige Wärmequelle 2 erforderlichen Betriebsparameter hinsichtlich Wärmedifferenz zwischen Vorlauf und Rücklauf und Durchströmung eingehalten oder erreicht werden. Durch die Möglichkeit der voneinander unabhängigen Einstellung der Durchströmungen an den verschiedenen Wärmequellen 2 können einheitliche für den Pufferspeicher 22 oder die Wärmeverbraucher erforderliche Vorlauftemperaturen erreicht werden.

In der erfindungsgemäßen Wärmenutzungsanlage 1 sind mehrere Wärmequellen 2 vorhanden, denen jeweils eine Strahlpumpe 16, 17, 18, 19 vorgeschaltet ist. Die Wärmequellen 2 sind an ein Wärmeträger-Kreislaufsystem 7 angeschlossen, dass eine einzige zentrale Umwälzpumpe oder Umwälzpumpeneinheit 20 aufweist.

### Bezugszeichen

- 1: Wärmenutzungsanlage
- 2: Wärmequellen
- 3: Solaranlage
- 4: Ofen
- 5: Kessel
- 6: Wärmequelle
- 7: Wärmeträger-Kreislaufsystem
- 8-11: Vorlauf
- 12-15: Rücklauf
- 16-19: Strahlpumpe
- 20: Umwälzpumpeneinheit
- 21: Umwälzpumpe
- 22: Pufferspeicher
- 25: Wärmeträgerkreislauf
- 27: Umwälzpumpe
- 28: Sonnenkollektor
- 29: Steuereinrichtung
- 30-33: Stellmotoren

## Patentansprüche

1. Wärmenutzungsanlage, insbesondere für Gebäude, insbesondere Wohngebäude,
mit wenigstens zwei Wärmequellen (2), die jeweils einen Vorlauf (8, 9) und einen Rücklauf (12, 13) aufweisen,
mit wenigstens einem Wärmeträger-Kreislaufsystem (7) zum Transport der Wärme von wenigstens einer der Wärmequellen (2) zu wenigstens einem Wärmeabnehmer,
mit einer zentralen Umwälzpumpeneinheit (21) zur Aufrechterhaltung einer Wärmeträger-Umlaufströmung in dem Wärmeträger-Kreislaufsystem (7),
mit Strahlpumpen (16, 17) vor den Wärmequellen (2), wobei jede Strahlpumpe (16, 17) jeweils einen Treibanschluss (16a, 17a), einen Sauganschluss (16b, 17b) sowie einen Diffusoranschluss (16c, 17c) aufweist, wobei die Diffusoranschlüsse (16c, 17c) mit dem jeweiligen Rücklauf verbunden sind,
**dadurch gekennzeichnet,**
**dass** die Wärmequellen (2) unterschiedlich ausgebildete Wärmequellen (3, 4, 5, 6) sind,
**dass** die Sauganschlüsse (16b, 17b) mit dem jeweiligen Vorlauf (8, 9) verbunden und die Treibanschlüsse (16a, 17a) über eine Rücklaufsammelleitung (20) an die Druckseite einer Umwälzpumpeneinheit (21) angeschlossen sind, die aus einer oder mehreren elektrischen Pumpen besteht, so dass die Umwälzpumpeneinheit (21) direkt mit dem Rücklauf (23) aller Wärmeverbraucher (2) oder eines Pufferspeichers (22) verbunden ist.

2. Wärmenutzungsanlage nach Anspruch 1, **dadurch gekennzeichnet, dass** die Wärmequellen voneinander unabhängig Wärme liefernde Wärmequellen (3, 4, 5, 6) sind.

3. Wärmenutzungsanlage nach Anspruch 1, **dadurch gekennzeichnet, dass** wenigstens eine der Wärmequellen (2) eine thermische Solaranlage (3) ist.

4. Wärmenutzungsanlage nach Anspruch 1, **dadurch gekennzeichnet, dass** wenigstens eine der Wärmequellen (2) ein Ofen (4) oder Heizkessel (5) zum Verbrennen fester, flüssiger oder gasförmiger Brennstoffe ist.

5. Wärmenutzungsanlage nach Anspruch 1, **dadurch gekennzeichnet, dass** wenigstens eine der Wärmequellen (2) eine Wärmepumpe oder eine Geothermieanlage (6) ist.

6. Wärmenutzungsanlage nach Anspruch 1, **dadurch gekennzeichnet, dass** die Strahlpumpen (16, 17, 18, 19) jeweils ein Stellorgan aufweisen, das von einer Steuereinrichtung (29) steuerbar ist.

7. Wärmenutzungsanlage nach Anspruch 1, **dadurch gekennzeichnet, dass** jede Strahlpumpe (16, 17, 18, 19), die einer Wärmequelle (2) vorgeschaltet ist, einen Diffusor (c) aufweist, der mit dem jeweiligen Rücklauf (12, 13, 14, 15) der jeweiligen Wärmequelle (2) verbunden ist.

8. Wärmenutzungsanlage nach Anspruch 1, **dadurch gekennzeichnet, dass** jede Strahlpumpe (16, 17, 18, 19), die einer Wärmequelle (2) vorgeschaltet ist, einen Treibdüsenanschluss (a) aufweist, der mit einer Druckseite der zentralen Umwälzpumeneinheit (21) verbunden ist.

9. Wärmenutzungsanlage nach Anspruch 1, **dadurch gekennzeichnet, dass** in dem Wärmeträger-Kreislaufsystem (7) ein Pufferspeicher (22) vorgesehen ist.

10. Wärmenutzungsanlage nach Anspruch 1, **dadurch gekennzeichnet, dass** wenigstens eine der Wärmequellen (2) einen Wärmeträgerkreislauf (25) aufweist, der über einen Wärmetauscher (26) mit dem Wärmeträgerkreislaufsystem (7) verbunden ist.

11. Wärmenutzungsanlage nach Anspruch 10, **dadurch gekennzeichnet, dass** der Wärmeträgerkreislauf eine gesonderte Umwälzpumpe (27) aufweist.

## Claims

1. Heat usage system, in particular for buildings, in particular residential buildings, with at least two heat sources (2) which each have a supply (8, 9) and a return (12, 13),
with at least one heat carrier circuit system (7) for transporting the heat from at least one of the heat sources (2) to at least one heat consumer,
with a central circulation pump unit (21) for maintaining a heat carrier circulation flow in the heat carrier circuit system (7),
with jet pumps (16, 17) upstream of the heat sources (2),
wherein each jet pump (16, 17) has a drive port (16a, 17a), a suction port (16b, 17b) and a diffuser port (16c, 17c), wherein the diffuser ports (16c, 17c) are each connected to a respective return,
**characterised in that** the heat sources (2) are differently configured heat sources (3, 4, 5, 6), and
that the suction ports (16b, 17b) are connected to the respective supply (8, 9), and the drive ports (16a, 17a) are connected via a return collection line (20) to the pressure side of a circulation pump unit (21) which comprises one or more electric pumps so that the circulation pump unit (21) is connected directly to the return (23) of all heat consumers (2) or a buffer store (22).

2. Heat usage system according to claim 1, **characterised in that** the heat sources are heat sources (3, 4, 5, 6) delivering heat independently of each other.

3. Heat usage system according to claim 1, **characterised in that** at least one of the heat sources (2) is a thermal solar plant (3).

4. Heat usage system according to claim 1, **characterised in that** at least one of the heat sources (2) is a furnace (4) or heating boiler (5) for burning solid, liquid or gaseous fuel.

5. Heat usage system according to claim 1, **characterised in that** at least one of the heat sources (2) is a heat pump or a geothermal plant (6).

6. Heat usage system according to claim 1, **characterised in that** the jet pumps (16, 17, 18, 19) each have an actuator element which can be controlled by a control device (29).

7. Heat usage system according to claim 1, **characterised in that** each jet pump (16, 17, 18, 19) which is connected upstream of a heat source (2) comprises a diffuser (c) which is connected to the respective return (12, 13, 14, 15) of the respective heat source (2).

8. Heat usage system according to claim 1, **characterised in that** each jet pump (16, 17, 18, 19) which is connected upstream of a heat source (2) has a jet nozzle port (a) which is connected to a pressure side of the central circulation pump unit (21).

9. Heat usage system according to claim 1, **characterised in that** a buffer store (22) is provided in the heat carrier circuit system (7).

10. Heat usage system according to claim 1, **characterised in that** at least one of the heat sources (2) has a heat carrier circuit (25) which is connected to the heat carrier circuit system (17) via a heat exchanger (26).

11. Heat usage system according to claim 10, **characterised in that** the heat carrier circuit has a separate circulation pump (27).

## Revendications

1. Installation de récupération thermique, en particulier pour des bâtiments, en particulier des bâtiments d'habitation,
comprenant au moins deux sources de chaleur (2) qui comportent chacune un aller (8, 9) et un retour (12, 13),
comprenant au moins un système de circuit caloporteur (7) pour le transport de la chaleur depuis au moins une des sources de chaleur (2) jusqu'à au moins un dissipateur de chaleur,
comprenant une unité centrale de pompe de circulation (21) pour entretenir un courant de circulation de caloporteur dans le système de circuit caloporteur (7), comprenant des pompes à jet (16, 17) en amont des sources de chaleur (2), chaque pompe à jet (16, 17) comportant un raccord de refoulement (16a, 17a), un raccord d'aspiration (16b, 17b) ainsi qu'un raccord de diffuseur (16c, 17c), les raccords de diffuseur (16c, 17c) étant reliés au retour correspondant, **caractérisée**
**en ce que** les sources de chaleur (2) sont des sources de chaleur (3, 4, 5, 6) de conceptions différentes,
**en ce que** les raccords d'aspiration (16b, 17b) sont reliés à l'aller correspondant (8, 9), et les raccords de refoulement (16a, 17a) sont reliés, par l'intermédiaire d'un collecteur de retour (20), au côté pression d'une unité centrale de pompe de circulation (21) qui est constituée d'une ou plusieurs pompes électriques, de sorte que l'unité centrale de pompe de circulation (21) est reliée directement au retour (23) de tous les consommateurs de chaleur (2) ou d'un réservoir d'accumulation (22).

2. Installation de récupération thermique selon la revendication 1, **caractérisée en ce que** les sources de chaleur sont des sources de chaleur (3, 4, 5, 6) fournissant de la chaleur indépendamment l'une de l'autre.

3. Installation de récupération thermique selon la revendication 1, **caractérisée en ce qu'**au moins une des sources de chaleur (2) est une installation thermique solaire (3).

4. Installation de récupération thermique selon la revendication 1, **caractérisée en ce qu'**au moins une des sources de chaleur (2) est un four (4) ou une chaudière de chauffage (5) pour la combustion de combustibles solides, liquides ou gazeux.

5. Installation de récupération thermique selon la revendication 1, **caractérisée en ce qu'**au moins une des sources de chaleur (2) est une pompe à chaleur ou une installation de géothermie (6).

6. Installation de récupération thermique selon la revendication 1, **caractérisée en ce que** les pompes à jet (16, 17, 18, 19) comportent chacune un organe de réglage qui est commandable par un équipement de commande (29).

7. Installation de récupération thermique selon la revendication 1, **caractérisée en ce que** chaque pompe à jet (16, 17, 18, 19), qui est disposée en amont d'une source de chaleur (2), comporte un diffuseur (c) qui est relié au retour correspondant (12, 13, 14, 15) de la source de chaleur correspondante (2).

8. Installation de récupération thermique selon la revendication 1, **caractérisée en ce que** chaque pompe à jet (16, 17, 18, 19), qui est disposée en amont d'une source de chaleur (2), comporte un raccord de refoulement (a) qui est relié à un côté pression de l'unité centrale de pompe de circulation (21).

9. Installation de récupération thermique selon la revendication 1, **caractérisée en ce que** dans le système de circuit caloporteur (7) est prévu un réservoir d'accumulation (22).

10. Installation de récupération thermique selon la revendication 1, **caractérisée en ce qu'**au moins une des sources de chaleur (2) comporte un circuit caloporteur (25) qui est relié au système de circuit caloporteur (7) par l'intermédiaire d'un échangeur thermique (26).

11. Installation de récupération thermique selon la revendication 10, **caractérisée en ce que** le circuit caloporteur comporte une pompe de circulation distincte (27) .
